(19) **Europäisches Patentamt European Patent Office Office européen des brevets**

(11) **EP 1 691 193 B1**

(12) **FASCICULE DE BREVET EUROPEEN**

(45) Date de publication et mention
de la délivrance du brevet:
**11.03.2009 Bulletin 2009/11**

(51) Int Cl.:
***G01N 29/04*** *(2006.01)*     ***G01N 29/11*** *(2006.01)*
***G01N 29/22*** *(2006.01)*     ***G01N 29/24*** *(2006.01)*
***G01N 29/265*** *(2006.01)*

(21) Numéro de dépôt: **06290097.2**

(22) Date de dépôt: **16.01.2006**

(54) **Procédé de contrôle par ultrasons d'une zone d'ombre d'une pièce en immersion**

Verfahren zur Ultraschallprüfung des Schattenbereichs eines eingetauchten Teils

Method for ultrasonic testing of a shadow area of an immersed object

(84) Etats contractants désignés:
**DE FR GB**

(30) Priorité: **27.01.2005 FR 0500835**

(43) Date de publication de la demande:
**16.08.2006 Bulletin 2006/33**

(73) Titulaire: **SNECMA**
**75015 Paris (FR)**

(72) Inventeurs:
 • **Chatellier, Jean-Yves François Roger**
 **94110 Arcueil (FR)**
 • **Coulette, Richard Michaël**
 **94250 Gentilly (FR)**

(74) Mandataire: **Ramey, Daniel et al**
**Ernest Gutmann - Yves Plasseraud S.A.S.**
**3, rue Auber**
**75009 Paris (FR)**

(56) Documents cités:
**US-A- 5 565 627**

 • **PATENT ABSTRACTS OF JAPAN vol. 011, no. 291 (P-618), 19 septembre 1987 (1987-09-19) & JP 62 085860 A (NIPPON STEEL CORP), 20 avril 1987 (1987-04-20)**
 • **J. KRAUTKRÄMER, H. KRAUTKRÄMER: ULTRASONIC TESTING OF MATERIALS, 1983, XP002352087 Springer-Verag, Berlin Heidelberg New York**

**EP 1 691 193 B1**

## Description

La présente invention concerne un procédé de contrôle d'une pièce en immersion au moyen d'un faisceau d'ondes ultrasonores focalisé pour la détection de défauts dans la pièce tels que par exemple des bulles, des inclusions, etc.

Cette technique est mise en oeuvre dans une cuve remplie d'un liquide de couplage acoustique tel que de l'eau, avec un transducteur ultrasonique qui est immergé dans l'eau et qui est orienté vers la pièce à contrôler perpendiculairement à une surface de celle-ci, le transducteur étant séparé de cette surface de la pièce par une hauteur d'eau appelée « colonne d'eau ».

Le transducteur émet un faisceau d'ondes ultrasonores focalisé qui sont pour partie réfléchies à la surface de la pièce et pour partie transmises à l'intérieur de la pièce, les ondes ultrasonores transmises pouvant rencontrer sur leur trajectoire un défaut interne capable de les réfléchir. Les échos provenant de ces réflexions sont captés par le transducteur et leurs amplitudes représentent l'importance des défauts détectés.

En pratique, le contrôle par ultrasons d'une pièce comprend un déplacement relatif entre la pièce et le transducteur ou une série de transducteurs, permettant de réaliser un balayage de la pièce par un ou des faisceaux d'ultrasons focalisé.

Le document intitulé « Ultrasonic testing of Materials » de Krautkrämer J. et H., 1983, XP002352087 Springer-Verlag, Berlin Heidelberg New York, décrit un procédé de détection de défauts dans une pièce au moyen d'un transducteur ultrasonique.

Le brevet US-A-5,565,627 décrit un dispositif de détection par ultrasons du bord d'une feuille.

L'abrégé du brevet JP-A-62 085860 décrit un procédé de détection par ultrasons de défauts à l'extrémité tronconique d'un tube soudé.

Lorsqu'un faisceau d'ultrasons focalisé est approché progressivement d'un bord de la pièce, une partie de plus en plus grande de ce faisceau dépasse du bord de la pièce, de sorte qu'une partie de l'énergie du faisceau focalisé est émise en dehors de la pièce et ne sera pas réfléchie par un défaut de la partie de la pièce couverte par le faisceau focalisé.

En conséquence, le défaut sera détecté sous forme d'un écho, mais avec une amplitude de plus en plus faible quand on approche le faisceau focalisé du bord de la pièce, cette amplitude étant nulle quand le faisceau focalisé ne rencontre plus la pièce.

La partie de la pièce dans laquelle l'amplitude de l'écho produit par la réflexion du faisceau focalisé sur un défaut diminue en raison de ce phénomène est une zone non contrôlable par les procédés connus et est appelée zone d'ombre ou zone morte latérale de la pièce.

La technique connue ne permet pas de supprimer cette zone morte latérale sur toute la profondeur de la pièce et on est donc amené à lui donner par précaution une valeur maximale, par exemple de 12 millimètres, alors qu'elle peut être beaucoup plus faible en réalité, par exemple deux fois plus faible, ce qui correspond à une perte de matière relativement importante.

L'invention a notamment pour but de contrôler par ultrasons une pièce en immersion en supprimant les zones d'ombre latérales, ce contrôle étant simple, efficace et économique.

Elle propose à cet effet un procédé selon la revendication 1.

Le procédé selon l'invention permet de détecter un défaut proche d'un bord de la pièce et situé dans une zone d'ombre latérale, de la même façon que si ce défaut était en dehors de la zone d'ombre. Le signal réfléchi par le défaut est renvoyé vers le transducteur dans la direction d'incidence, de sorte que l'amplitude de l'écho capté par le transducteur est sensiblement égale à celle qui serait réfléchie par un défaut identique présent à la même profondeur mais en dehors de la zone d'ombre et qui serait détecté au moyen d'un faisceau émis par le transducteur perpendiculairement à la surface de la pièce. La totalité du volume de la pièce est ainsi contrôlable de manière précise.

Selon une autre caractéristique de l'invention, le procédé consiste au préalable à mesurer, sur des pièces étalons, des premières valeurs dudit angle à partir desquelles la zone d'ombre est supprimée à différentes profondeurs dans la pièce, et à sélectionner pour le contrôle un angle qui est au moins égal ou légèrement supérieur au maximum des premières valeurs mesurées.

Il consiste également à mesurer, sur une pièce étalon, une seconde valeur de l'angle d'inclinaison, à partir de laquelle l'amplitude de l'onde réfléchie par un défaut commence à diminuer quand cet angle augmente, et à sélectionner pour le contrôle un angle d'inclinaison de l'axe du faisceau focalisé qui est compris entre le maximum des premières valeurs mesurées et ladite seconde valeur.

En pratique, l'angle d'inclinaison du faisceau focalisé incident par rapport à la normale à la surface de la pièce est de 3° environ, pour la suppression de la zone d'ombre dans le cas d'une pièce en titane.

Le procédé consiste également à déterminer préalablement l'étendue de la zone d'ombre depuis un bord de la pièce, ce qui permet de contrôler une majeure partie de cette pièce avec un faisceau d'ultrasons focalisé orienté perpendiculairement à la surface de la pièce, et de n'incliner ce faisceau focalisé que quand on pénètre dans la zone d'ombre.

D'autres caractéristiques, détails et avantages de l'invention apparaîtront à la lecture de la description suivante faite à titre d'exemple non limitatif en référence aux dessins annexés dans lesquels :

- la figure 1 est une vue schématique en coupe d'un dispositif de contrôle par ultrasons d'une pièce en immersion ;
- les figures 2 à 4 sont des vues schématiques en coupe de pièces étalons, illustrant une étape du procédé selon l'invention de contrôle par ultrasons de la pièce ;
- la figure 5 est un graphe représentant la variation de l'angle d'inclinaison du faisceau d'ultrasons focalisé en fonction de la profondeur de trous dans les pièces étalons ;
- les figures 6 et 7 sont des vues schématiques en coupe de la pièce, illustrant une technique de détermination de l'étendue d'une zone d'ombre latérale ;
- la figure 8 est un graphe représentant l'évolution de l'amplitude d'un écho du faisceau focalisé en fonction de la position d'un élément déplacé sur la surface de la pièce par rapport au faisceau.

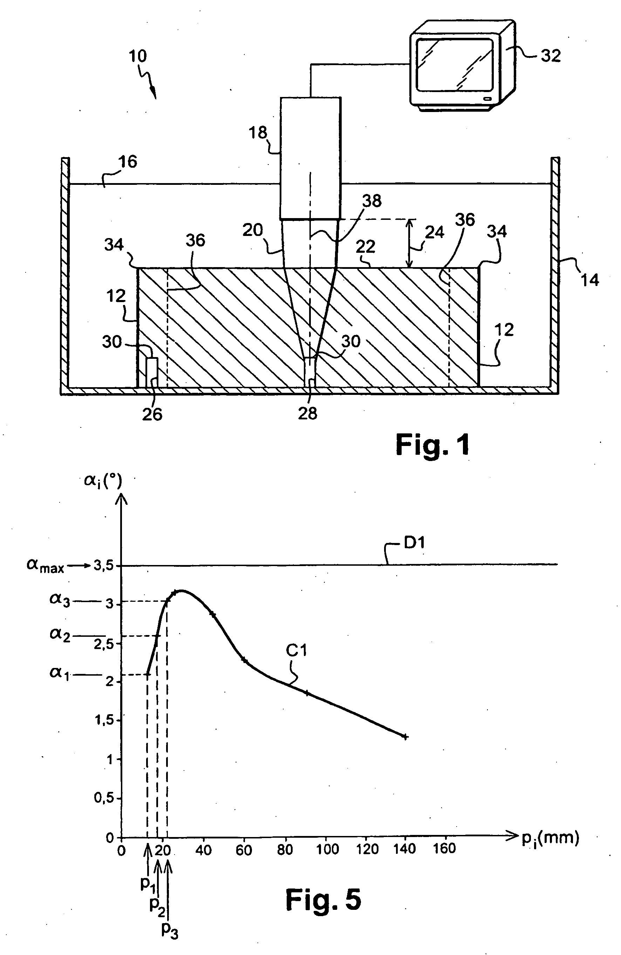

La figure 1 représente schématiquement un dispositif 10 de contrôle par ultrasons d'une pièce 12 en immersion, comprenant une cuve 14 remplie d'eau 16 dans laquelle sont immergés la pièce 12 à contrôler et un transducteur ultrasonique 18 générant un faisceau d'ondes ultrasonores focalisé 20 orienté perpendiculairement à une surface 22 de la pièce 12, le transducteur 18 étant séparé de cette surface 22 de la pièce par une hauteur d'eau appelée « colonne d'eau » 24.

Le transducteur 18 est un transducteur ultrasonique multiéléments associé à des moyens de focalisation électronique et relié à des moyens de commande, tels qu'un micro-ordinateur.

Les ondes ultrasonores émises sont pour partie réfléchies à la surface 22 de la pièce et pour partie transmises à l'intérieur de celle-ci, les ondes ultrasonores transmises dans la pièce 12 pouvant rencontrer sur leur trajectoire un défaut capable de les réfléchir. Un défaut est par exemple une bulle, une inclusion, etc, et est représenté dans des pièces étalons par un trou 26, 28 dont le fond 30 est plat et situé du coté de la surface 22 de la pièce, le trou débouchant sur la surface inférieure de la pièce 12.

Les ondes incidentes sur les fonds des trous ou sur les défauts des pièces sont réfléchies vers le transducteur multiéléments dans leur direction d'incidence, même lorsque cette direction n'est pas perpendiculaire à la surface des pièces. Les échos dus aux réflexions des ondes ultrasonores sur les fonds 30 des trous sont captés par le transducteur 18 et sont enregistrés et affichés sur des moyens 32 de visualisation de leurs amplitudes tels qu'un oscilloscope, qui sont reliés au transducteur 18.

Lors d'un contrôle par ultrasons de la pièce 12, le transducteur 18 est déplacé au dessus de la surface 22 de la pièce parallèlement à celle-ci à une valeur de la colonne d'eau 24 prédéterminée.

Lorsque le faisceau d'ultrasons focalisé 20 est près d'un bord 34 de la pièce et passe dans une zone d'ombre correspondante, schématiquement délimitée en figure 1 par des lignes 36 en traits pointillés, l'amplitude de l'onde réfléchie par un défaut 26 présent dans cette zone est beaucoup plus faible que celle d'un défaut 28 identique présent à la même profondeur en dehors de cette zone 36. Il en résulte une difficulté à localiser et à évaluer l'importance des défauts présents dans cette zone 36.

Le procédé selon l'invention permet de contrôler avec précision la totalité d'une pièce 12 au moyen d'un faisceau d'ondes ultrasonores focalisé en supprimant les zones d'ombre latérales de la pièce.

Il consiste, quand l'axe 38 du faisceau focalisé est proche d'un bord 34 de la pièce et passe dans une zone d'ombre 36 correspondante susceptible de masquer au moins en partie un défaut 26 présent dans cette zone 36, à incliner l'axe 38 du faisceau focalisé vers le bord 34 de la pièce par rapport à la normale à la surface 22 de la pièce, d'un angle suffisamment faible pour ne pas modifier l'amplitude de l'onde réfléchie par le défaut 26 et suffisamment grand pour supprimer la zone d'ombre latérale 36 sur la totalité ou la quasi-totalité de la profondeur de la pièce 12.

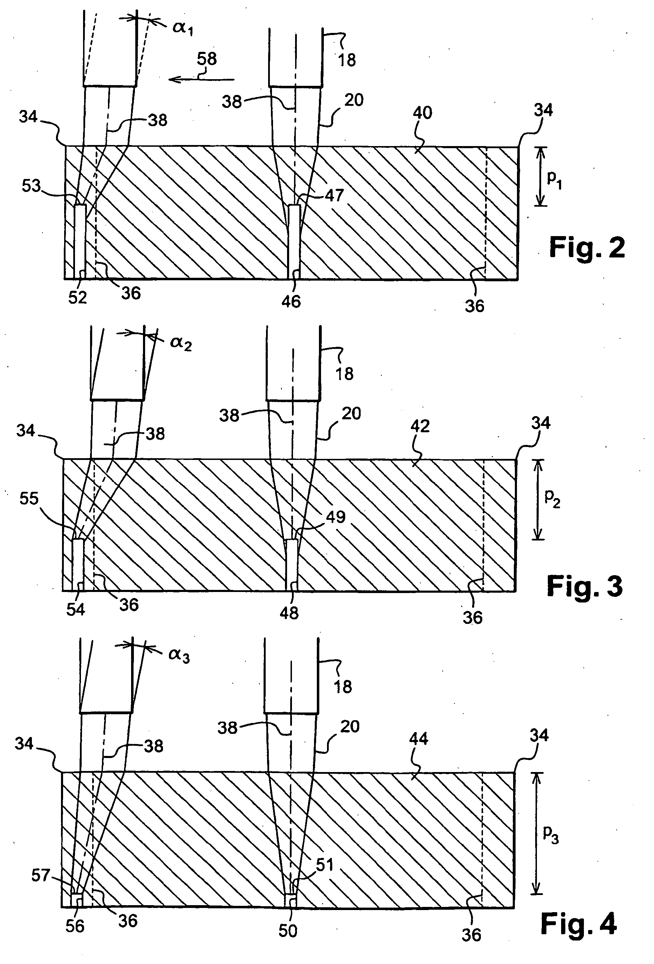

Les valeurs de cet angle sont déterminées sur des pièces étalons, comme représenté aux figures 2 à 4.

En figure 2, une pièce étalon 40 comprend un trou 46 à fond plat 47 suffisamment distant des bords 34 de la pièce pour être en dehors des zones d'ombre latérales correspondantes, et un autre trou 52 identique à fond plat 53 suffisamment proche d'un bord 34 de la pièce pour être masqué par la zone d'ombre 36 correspondante, les fonds plats 47, 53 des trous 46, 52 étant situés à une profondeur $p_1$ de la surface de la pièce 40.

La zone d'ombre 36 peut être fixée arbitrairement, par exemple à 12mm, ou être déterminée par une technique qui sera décrite en détail dans ce qui suit.

Le transducteur 18 est séparé de la surface de la pièce par une colonne d'eau d'une valeur prédéterminée et l'axe 38 du faisceau d'ultrasons focalisé est orienté perpendiculairement à la surface de la pièce 40 et aligné sur le trou 46 de la pièce pour mesurer l'amplitude maximale de l'écho produit par la réflexion du faisceau focalisé sur le fond plat 47 du trou. En pratique, les moyens 32 sont réglés pour afficher cette amplitude à 80% de la hauteur d'écran.

Le transducteur 18 est ensuite déplacé en translation au dessus de la pièce 40 suivant la flèche 58, en direction du trou 52 de la pièce et parallèlement à la surface de celle-ci, jusqu'à ce que le faisceau d'ultrasons focalisé 20 soit au voisinage de l'axe du trou 52.

Le procédé consiste alors à incliner l'axe 38 du faisceau focalisé vers le bord 34 de la pièce par rapport à la normale à la surface de la pièce, d'un angle $\alpha_i$ pour lequel l'amplitude de l'onde réfléchie sur le fond plat 53 du trou redevient maximale, c'est-à-dire sensiblement égale à l'amplitude de l'onde réfléchie sur le fond plat 47 du trou 46 précédemment mesurée. Pour cet angle d'inclinaison, la zone d'ombre a été supprimée à la profondeur du fond plat 53 du trou.

En pratique, l'angle d'inclinaison à partir duquel la zone d'ombre 36 est supprimée à cette profondeur est déterminé en inclinant progressivement l'axe 38 du faisceau focalisé vers le bord 34 de la pièce et en visualisant sur les moyens 32 la variation de l'amplitude de l'onde réfléchie sur le fond 53 du trou.

En figures 3 et 4, on procède de la même manière que décrite précédemment sur des pièces étalons 42, 44 dont les fonds plats 49 et 55, et 51 et 57 des trous 48 et 54, et 50 et 56, respectivement, sont à des profondeurs $p_2$ et $p_3$ différentes entre elles et de la profondeur $p_1$.

On détermine ainsi les angles d'inclinaison $\alpha_1$, $\alpha_2$ et $\alpha_3$ de l'axe 38 du faisceau focalisé à partir desquels la zone morte 36 disparaît et l'amplitude des ondes réfléchies sur les fonds plats 53, 55, 57 des trous 52, 54 et 56 est maximale, et on refait ces déterminations sur d'autres trous à fond plat situés à des profondeurs croissantes dans la pièce.

La figure 5 est un graphe représentant la courbe C1 de variation de l'angle d'inclinaison $\alpha_i$ de l'axe 38 du faisceau focalisé par rapport à la normale à la surface de la pièce en fonction de la profondeur $p_i$ du fond plat du trou sur lequel la mesure est faite. On construit cette courbe par mesure des valeurs de l'angle d'inclinaison $\alpha_i$ pour les profondeurs $p_1$, $p_2$ et $p_3$ et pour un certain nombre de profondeurs supplémentaires.

Dans cet exemple, les pièces étalons sont en titane et les trous à fonds plats cylindriques ont un diamètre de 0,4mm.

On voit en figure 5 que l'angle d'inclinaison augmente depuis $\alpha_1$ égal à 2,10° environ, correspondant à la profondeur $p_1$ du trou 52 de 15mm environ, jusqu'à une valeur maximale égale à 3,2° environ, correspondant à une profondeur de trou de 31 mm, et décroît ensuite jusqu'à une valeur de 1,2° correspondant à une profondeur de trou de 140mm environ.

Cette courbe C1 permet de déterminer la valeur de l'angle d'inclinaison de l'axe du faisceau focalisé par rapport à la normale à la surface de la pièce, à partir de laquelle la zone d'ombre latérale est supprimée sur la totalité ou la quasi-totalité de la profondeur de la pièce. Cette valeur est donnée par la valeur maximale de l'angle d'inclinaison $\alpha_i$, obtenue expérimentalement sur des pièces étalons.

Pour une pièce en titane, il suffit donc d'incliner l'axe du faisceau focalisé à son approche des bords de la pièce, d'un angle au moins égal ou préférentiellement légèrement supérieur à 3,2° pour pouvoir supprimer les zones d'ombre latérales.

Le procédé consiste également à mesurer, sur une pièce étalon, une valeur de l'angle d'inclinaison de l'axe du faisceau focalisé, à partir de laquelle l'amplitude de l'onde réfléchie par un trou commence à diminuer depuis sa valeur maximale quand cet angle augmente.

Cette valeur peut être déterminée en utilisant l'une quelconque des pièces étalons qui ont servi pour le tracé de la courbe C1 de la figure 5.

Pour une pièce en titane, cette valeur est de 3,5° environ et est représentée en figure 5 par la droite D1.

On peut donc, en pratique, incliner l'axe du faisceau d'ultrasons focalisé vers le bord de la pièce par rapport à la normale à la surface de la pièce, d'un angle compris entre la valeur maximale obtenue expérimentalement, qui est de 3,2°, et la valeur au-delà de laquelle l'amplitude de l'onde réfléchie sur un trou décroît, qui est de 3,5°. Cette plage de valeurs permet de supprimer la zone morte latérale sur la totalité de la profondeur de la pièce.

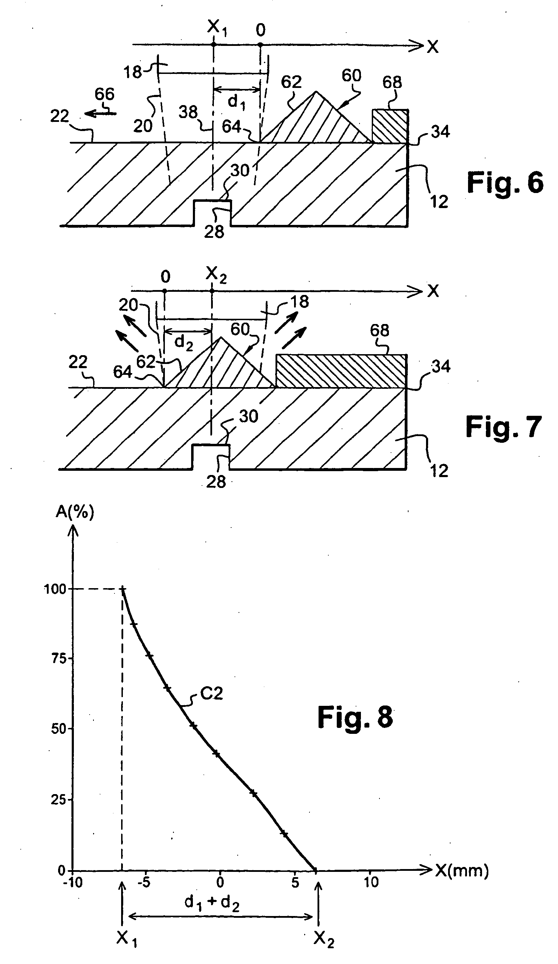

Les figures 6 et 7 sont des vues schématiques en coupe illustrant une technique de détermination de l'étendue d'une zone d'ombre correspondant à un bord d'une pièce.

Le transducteur 18 est séparé de la surface 22 de la pièce 12 par une colonne d'eau d'une valeur prédéterminée et l'axe 38 du faisceau focalisé est orienté perpendiculairement à la surface 22 de la pièce et aligné sur un trou 28 à fond plat formé dans la pièce à une profondeur donnée et à distance de ses bords 34. L'amplitude de l'onde réfléchie sur le fond 30 du trou est mesurée et affichée à 80% de la hauteur d'écran des moyens 32.

Un élément 60 de déviation du faisceau focalisé 20 est posé sur la surface 22 de la pièce et est déplacé en direction de l'axe 38 du faisceau focalisé 20 pour dévier une partie de ce faisceau focalisé en dehors de la zone de captation du transducteur 18.

Dans l'exemple représenté, l'élément de déviation 60 est un prisme présentant au moins une face de réflexion 62 inclinée, par exemple à 45°, sur la surface 22 de la pièce et sur l'axe 38 du faisceau focalisé, cette face 62 se terminant par un bord 64 en contact avec la surface 22 de la pièce.

Le prisme 60 est déplacé pas à pas suivant la flèche 66 le long d'un axe qui coupe l'axe 38 du faisceau d'ultrasons focalisé, entre deux positions extrêmes dans l'une desquelles le prisme 60 est extérieurement tangent à la section efficace du faisceau focalisé sur la surface 22 de la pièce, comme représenté en figure 6 où le prisme 60 est dans la position $X_1$, et dans l'autre desquelles il dévie entièrement le faisceau focalisé 20, comme représenté en figure 7 où le prisme est dans la position $X_2$. On définit par $d_1$ et $d_2$ les distances entre l'axe 38 du faisceau focalisé et le bord 64 du prisme, égales à respectivement $|X_1|$ et $|X_2|$.

Le prisme 60 est par exemple positionné au moyen de cales 68 interposées entre le prisme 60 et le bord 34 de la pièce, les cales 68 ayant des dimensions très précises permettant de fixer avec une très grande précision, par exemple de l'ordre du micromètre, la position du bord 64 du prisme 60 par rapport à l'axe 38 du faisceau.

La figure 8 est un graphe représentant la courbe C2 de variation de l'amplitude de l'écho produit par la réflexion du faisceau focalisé sur le fond 30 du trou en fonction de la position du bord 64 du prisme par rapport à l'axe 38 du faisceau focalisé le long de l'axe X. Pour construire cette courbe, on relève les valeurs de l'amplitude de l'écho pour les positions de $X_1$ et $X_2$ et pour un certain nombre de positions intermédiaires.

L'amplitude décroît depuis sa valeur maximale correspondant à la position $X_1$ jusqu'à une valeur nulle ou sensiblement nulle correspondant à la position $X_2$.

La dimension de la zone d'ombre est égale au rayon R de la section efficace du faisceau focalisé 20 à la surface de la pièce qui est défini par l'expression :

$$R = (d_1 + d_2) / 2$$

Dans l'exemple illustré en figure 8, pour une valeur de la colonne d'eau de 40,8mm entre un transducteur Panametrics V322-239 440 de focale F = 8 pouces (203,2mm) et de diamètre d = 1 pouce (25,4mm), et la surface 22 de la pièce, la dimension de la zone d'ombre est égale à :

$$R = (d_1 + d_2) / 2 = (|X_1| + |X_2|) / 2 = (6,69\text{mm} + 6,31\text{mm}) / 2 = 6,50\text{mm}$$

En pratique, les valeurs de $X_1$ et plus particulièrement de $X_2$ peuvent . être difficiles à obtenir avec précision. Elles peuvent être déterminées par extrapolation en utilisant des moyens appropriés de calcul de régression linéaire ou polynomiale de la courbe obtenue expérimentalement.

En variante, le procédé peut consister à relever les deux positions du bord 64 du prisme diamétralement opposées par rapport à l'axe 38 du faisceau focalisé, pour lesquelles le bord 64 du prisme est tangent à la section efficace du faisceau focalisé 20 à la surface de la pièce, la valeur de l'amplitude de l'écho produit par la réflexion du faisceau focalisé sur le fond du trou étant sensiblement maximale dans ces deux positions.

Pour cela, le prisme 60 est déplacé sur la surface 22 de la pièce suivant la flèche 66 jusqu'à la position $X_1$, puis est disposé de l'autre côté du faisceau focalisé 20, symétriquement par rapport à l'axe 38, et est déplacé sur la surface 22 de la pièce dans le sens opposé à la flèche 66, jusqu'à une position $X'_1$, équivalente à $X_1$.

La distance entre ces deux positions $X_1$ et $X'_1$ permet de déterminer la dimension de la zone d'ombre qui est égale à :

$$R = (|X_1| + |X'_1|) / 2$$

**Revendications**

**1.** Procédé de contrôle par ultrasons d'une pièce (12) en immersion au moyen d'un transducteur (18) émettant un faisceau d'ondes ultrasonores focalisé (20) et captant les échos produits par les réflexions du faisceau focalisé (20) sur d'éventuels défauts (26, 28) de cette pièce (12), l'axe (38) du faisceau focalisé (20) émis étant perpendiculaire à la surface (22) de la pièce (12), le procédé consistant, quand l'axe (38) du faisceau focalisé (20) est proche d'un bord (34) de la pièce (12) et passe dans une zone d'ombre (36) correspondante susceptible de masquer au moins en partie un défaut (26) présent dans cette zone (36), à incliner l'axe (38) du faisceau focalisé (20) vers le bord (34) de la pièce (12) par rapport à la normale à la surface (22) de la pièce (12), **caractérisé en ce qu'**il consiste à utiliser un transducteur ultrasonique annulaire multiéléments associé à des moyens de focalisation électronique et **en ce que** l'axe du faisceau focalisé est incliné dans le cas précité d'un angle qui est déterminé pour ne pas modifier l'amplitude de l'onde réfléchie par le défaut (26) et pour supprimer la zone d'ombre latérale (36) sur la totalité ou la quasi-totalité de la profondeur de la pièce (12).

**2.** Procédé selon la revendication 1, **caractérisé en ce qu'**il consiste au préalable à mesurer, sur des pièces étalons (40, 42, 44), des premières valeurs dudit angle à partir desquelles la zone d'ombre (36) est supprimée à différentes profondeurs dans la pièce (12), et à sélectionner pour le contrôle un angle qui est au moins égal ou légèrement supérieur au maximum desdites premières valeurs mesurées.

**3.** Procédé selon la revendication 2, **caractérisé en ce qu'**il consiste également à mesurer sur une pièce étalon (40, 42, 44) une seconde valeur de l'angle d'inclinaison, à partir de laquelle l'amplitude de l'onde réfléchie par un défaut commence à diminuer quand cet angle augmente, et à sélectionner pour le contrôle un angle d'inclinaison de l'axe (38) du faisceau focalisé (20) qui est compris entre le maximum desdits premières valeurs et ladite seconde valeur.

**4.** Procédé selon l'une des revendications précédentes, **caractérisé en ce que** l'angle d'inclinaison du faisceau focalisé (20) incident par rapport à la normale à la surface de la pièce est de 3° environ, pour une pièce (12) en titane.

**5.** Procédé selon l'une des revendications précédentes, **caractérisé en ce que,** pour déterminer l'étendue de la zone d'ombre (36) depuis un bord (34) de la pièce (12), il consiste à :

- déplacer en translation sur la surface (22) de la pièce (12), le long d'un axe qui coupe l'axe (38) du faisceau d'ultrasons focalisé (20), un élément de déviation (60) du faisceau focalisé (20) ; et
- relever les positions de cet élément (60) pour lesquelles l'amplitude de l'écho produit par la réflexion du faisceau focalisé (20) sur un défaut (28) varie entre une valeur maximale et une valeur minimale.

**6.** Procédé selon la revendication 5, **caractérisé en ce que** l'élément de déviation est un prisme (60) présentant au moins une face (62) de réflexion inclinée, par exemple à 45°, sur la surface (22) de la pièce (12) et sur l'axe (38) du faisceau focalisé (20).

**7.** Procédé selon la revendication 6, **caractérisé en ce qu'**il consiste à :

- relever les deux positions du prisme (60) diamétralement opposées par rapport à l'axe (38) du faisceau d'ultrasons focalisé (20), pour lesquelles l'amplitude de l'écho produit par la réflexion du faisceau focalisé (20) sur le défaut (28) commence à diminuer depuis une valeur maximale quand on rapproche le prisme (60) de l'axe (38) du faisceau focalisé (20) ; et
- calculer la moitié de la distance entre ces deux positions pour obtenir l'étendue de la zone d'ombre latérale (36).

**Claims**

**1.** A method of using ultrasound to inspect a part (12) in immersion, the method making use of a transducer (18) emitting a focused ultrasound wave beam (20) and picking up the echoes produced by the focused beam (20) being reflected on any defects (26, 28) in said part (12), the axis (38) of the emitted focused beam (20) being perpendicular to the surface (22) of the part (12), the method consisting, when the axis (38) of the focused beam (20) is close to an edge (34) of the part (12) and is passing into a corresponding shadow zone (36) that might mask a defect (26) present in said zone (36), at least to some extent, in tilting the axis (38) of the focused beam (20) towards the edge (34) of the part (12) relative to the normal to the surface (22) of the part (12), the method being **characterized in that** it consists in using a multi-element annular ultrasound transducer associated with electronic focusing means, and **in that** the axis of the focused beam is tilted in the above-cited case by an angle that is determined to avoid modifying the amplitude of the wave reflected by the defect (26), and to eliminate the lateral shadow zone (36) over all or substantially all of the depth of the part (12).

**2.** A method according to claim 1, **characterized in that** it consists initially in using calibration parts (40, 42, 44) to measure first values for said angle beyond which the shadow zone (36) is eliminated at different depths within the part (12), and in selecting for inspection purposes an angle that is not less than, or that is slightly greater than, the maximum of said first measured values.

**3.** A method according to claim 2, **characterized in that** it also consists in measuring on a calibration part (40, 42, 44) a second value for the angle of inclination beyond which the amplitude of the wave reflected by a defect begins to decrease with increasing angle, and in selecting for inspection purposes an angle of inclination for the axis (38) of the focused beam (20) that lies between the maximum of said first values and said second value.

**4.** A method according to any preceding claim, **characterized in that** the angle of inclination of the incident focused beam (20) relative to the normal to the surface of the part is about 3°, for a part (12) made of titanium.

5. A method according to any preceding claim, **characterized in that,** in order to determine the extent of the shadow zone (36) from an edge (34) of the part (12), the method consists in:

· moving a deflector element (60) for deflecting the focused beam (20) in translation on the surface (22) of the part (12) along an axis intersecting the axis (38) of the focused ultrasound beam (20); and
· identifying the positions of said element (60) at which the amplitude of the echo produced by the reflection of the focused beam (20) on a defect (28) varies between a maximum value and a minimum value.

6. A method according to claim 5, **characterized in that** the deflector element is a prism (60) presenting at least one reflection face (62) that is inclined, e.g. at 45°, to the surface (22) of the part (12) and to the axis (38) of the focused beam (20).

7. A method according to claim 6, **characterized in that** it consists:

· in identifying two diametrically opposite positions of the prism (60) about the axis (38) of the focused ultrasound beam (20) for which the amplitude of the echo produced by the focused beam (20) reflected on the defect (28) begins to decrease from a maximum value as the prism (60) approaches the axis (38) of the focused beam (20); and
· in calculating half the distance between said two positions in order to obtain the extent of the lateral shadow zone (36).

**Patentansprüche**

1. Verfahren zur Ultraschallprüfung eines versenkten Teils (12) mittels eines Wandlers (18), der einen fokussierten Ultraschallstrahl (20) emittiert und das Echo abfängt, das von den Reflexionen des fokussierten Strahls (20) an eventuell vorhandenen Fehlern (26, 28) dieses Teils (12) erzeugt wird, wobei die Achse (38) des emittierten fokussierten Strahls (20) senkrecht zur Oberfläche (22) des Teils (12) verläuft, wobei das Verfahren darin besteht, dann, wenn die Achse (38) des fokussierten Strahls (20) nahe an einem Rand (34) des Teils (12) liegt und in einen entsprechenden Schattenbereich (36) übergeht, der zumindest teilweise einen in diesem Bereich (36) vorhandenen Mangel (26) verdecken kann, die Achse (38) des fokussierten Strahls (20) bezüglich der Normalen zur Oberfläche (22) des Teils (12) zum Rand (34) des Teils (12) hin zu neigen, **dadurch gekennzeichnet, dass** es darin besteht, einen ringförmigen Mehrelementultraschallwandler zu verwenden, der elektronischen Fokussierungsmitteln zugeordnet ist, dass die Achse des fokussierten Strahls dabei um einen Winkel geneigt wird, der so bestimmt ist, dass die Amplitude der von dem Fehler (26) reflektierten Welle nicht verändert wird und der seitliche Schattenbereich (36) in der gesamten bzw. fast der gesamten Tiefe des Teils (12) beseitigt wird.

2. Verfahren nach Anspruch 1, **dadurch gekennzeichnet, dass** es darin besteht, zuvor an Musterteilen (40, 42, 44) erste Winkelwerte zu messen, ab denen der Schattenbereich (36) in verschiedenen Tiefen im Teil (12) beseitigt wird, und zur Überprüfung einen Winkel zu wählen, der zumindest gleich oder geringfügig höher als der Maximalwert der ersten Messwerte ist.

3. Verfahren nach Anspruch 2, **dadurch gekennzeichnet, dass** es auch darin besteht, an einem Musterteil (40, 42, 44) einen zweiten Wert des Neigungswinkels zu messen, ab dem die Amplitude der von einem Fehler reflektierten Welle zu sinken beginnt, wenn dieser Winkel steigt, und zur Überprüfung einen Neigungswinkel der Achse (3 8) des fokussierten Strahls (20) zu wählen, der zwischen dem Maximalwert der ersten Messwerte und dem zweiten Wert liegt.

4. Verfahren nach einem der vorangehenden Ansprüche, **dadurch gekennzeichnet, dass** bei einem Teil (12) aus Titan der Neigungswinkel des einfallenden fokussierten Strahls (20) bezüglich der Normalen zur Oberfläche des Teils etwa 3° beträgt.

5. Verfahren nach einem der vorangehenden Ansprüche, **dadurch gekennzeichnet, dass** zum Bestimmen der Ausdehnung des Schattenbereichs (36) ausgehend von einem Rand (34) des Teils (12) es darin besteht,

- an der Oberfläche (22) des Teils (12) entlang einer die Achse (38) des fokussierten Ultraschallstrahls (20) schneidenden Achse ein Element (60) zum Ablenken des fokussierten Strahls (20) translatorisch zu verschieben, und

- diejenigen Stellungen dieses Elements (60) zu ermitteln, bei denen die Amplitude des von der Reflexion des fokussierten Strahls (20) an einem Fehler (28) erzeugten Echos zwischen einem Maximalwert und einem Minimalwert variiert.

6. Verfahren nach Anspruch 5, **dadurch gekennzeichnet, dass** das Ablenkelement ein Prisma (60) ist, das zumindest eine beispielsweise um 45° geneigte Reflexionsfläche (62) an der Oberfläche (22) des Teils (12) und auf der Achse (38) des fokussierten Strahls (20) aufweist.

7. Verfahren nach Anspruch 6, **dadurch gekennzeichnet, dass** es darin besteht,

- diejenigen zwei bezogen auf die Achse (38) des fokussierten Ultraschallstrahls (20) diametral entgegengesetzten Stellungen des Prismas (60) zu ermitteln, bei denen die Amplitude des von der Reflexion des fokussierten Strahls (20) an dem Fehler (28) erzeugten Echos ab einem Maximalwert zu sinken beginnt, wenn das Prisma (60) an die Achse (38) des fokussierten Strahls (20) angenähert wird, und

- den halben Abstand zwischen diesen beiden Stellungen zu berechnen, um die Ausdehnung des seitlichen Schattenbereichs (36) zu erhalten.

**Fig. 1**

**Fig. 5**

Fig. 2

Fig. 3

Fig. 4

**Fig. 6**

**Fig. 7**

**Fig. 8**

**RÉFÉRENCES CITÉES DANS LA DESCRIPTION**

**Documents brevets cités dans la description**

- US 5565627 A

- JP 62085860 A